# EUROPEAN PATENT APPLICATION

(11) **EP 4 451 738 A1**
(43) Date of publication of application: **23.10.2024**
(21) Application number: 22906433.2
(22) Date of filing: 09.12.2022
(51) Int. Cl.: H04W 28/16

(54) **PARAMETER CONFIGURATION METHOD AND APPARATUS, AND COMMUNICATION DEVICE, STORAGE MEDIUM AND SYSTEM**

(30) Priority: 13.12.2021 CN 202111523141
(71) Applicant: VIVO MOBILE COMMUNICATION CO., LTD., Dongguan, Guangdong 523863 (CN)
(72) Inventor: WANG, Wen, Dongguan, Guangdong 523863 (CN); XIE, Zhenhua, Dongguan, Guangdong 523863 (CN)
(74) Representative: Murgitroyd & Company
(86) International application number: PCT/CN2022/138017
(87) International publication number: WO 2023/109686

(57) **Abstract**

This application pertains to the field of communication technologies, and discloses a parameter configuration method and apparatus, a communication device, a storage medium, and a system. The parameter configuration method according to embodiments of this application includes: a UE sends target information to a network side device, where the target information is used to request for a target parameter for ranging and/or sidelink positioning, and the target information includes at least one of the following: capability information of the UE about supporting ranging, capability information of the UE about supporting sidelink positioning, request information for a ranging policy, and request information for a sidelink positioning policy; and the UE receives the target parameter sent by the network side device.

## Description

### CROSS-REFERENCE TO RELATED APPLICATION

This application claims priority to Chinese patent application No. 202111523141.8 filed in China on December 13, 2021, which is incorporated herein by reference in its entirety.

### TECHNICAL FIELD

This application pertains to the field of communication technologies, and specifically relates to a parameter configuration method and apparatus, a communication device, a storage medium, and a system.

### BACKGROUND

At present, for research on a 5G core network (5th-generation Core Network, 5GC) enhancement function to support ranging and sidelink positioning services within a 5G network coverage area, within a part of the coverage area, and beyond the coverage area, authorization and policy parameters used for the ranging and sidelink positioning services may be configured for one user equipment (User Equipment, UE) or one UE group, so that the UE can be authorized and executes the ranging and sidelink positioning services based on the corresponding policy parameters. When the UE requires to execute the ranging and sidelink positioning services or before the UE executes the ranging and sidelink positioning services, how to obtain the authorization and policy parameters used for the ranging and sidelink positioning services is an urgent problem to be solved.

### SUMMARY

Embodiments of this application provide a parameter configuration method and apparatus, a communication device, a storage medium, and a system, to solve a problem of how UE obtains authorization and policy parameters used for ranging and sidelink positioning services.

A first aspect provides a parameter configuration method. The method includes: UE sends target information to a network side device, where the target information is used to request for a target parameter for ranging and/or sidelink positioning, and the target information includes at least one of the following: capability information of the UE about supporting ranging, capability information of the UE about supporting sidelink positioning, request information for a ranging policy, and request information for a sidelink positioning policy; and the UE receives the target parameter sent by the network side device.

A second aspect provides a parameter configuration method. The method includes: A first network element in a network side device receives target information sent by UE, and sends the target information to a second network element in the network side device, where the target information is used by the UE to request for a target parameter for ranging and/or sidelink positioning, and the target information includes at least one of the following: capability information of the UE about supporting ranging, capability information of the UE about supporting sidelink positioning, request information for a ranging policy, and request information for a sidelink positioning policy. The target parameter includes at least one of the following: an identifier of a PLMN authorized for ranging, an identifier of a PLMN authorized for positioning, a service authorized for ranging and an identifier of a target layer corresponding to the service authorized for ranging, a service authorized for positioning and an identifier of a target layer corresponding to the service authorized for positioning, a service security parameter, a discovery parameter, a QoS parameter, and an AS configuration parameter.

A third aspect provides a parameter configuration method. The method includes: A second network element in a network side device receives target information sent by UE, where the target information is used by the UE to request for a target parameter for ranging and/or sidelink positioning, and the target information includes at least one of the following: capability information of the UE about supporting ranging, capability information of the UE about supporting sidelink positioning, request information for a ranging policy, and request information for a sidelink positioning policy; and the second network element determines the target parameter based on the target information, and sends the target parameter to the UE. The target parameter includes at least one of the following: an identifier of a PLMN authorized for ranging, an identifier of a PLMN authorized for positioning, a service authorized for ranging and an identifier of a target layer corresponding to the service authorized for ranging, a service authorized for positioning and an identifier of a target layer corresponding to the service authorized for positioning, a service security parameter, a discovery parameter, a QoS parameter, and an AS configuration parameter.

A fourth aspect provides a parameter configuration method. The method includes: A radio access network device in a network side device receives second information sent by a first network element in the network side device, where the second information includes at least one of the following: a QoS parameter for ranging, a QoS parameter for sidelink positioning, ranging authorization information, and sidelink positioning authorization information; and the radio access network device determines first indication information based on the second information, and sends the first indication information to UE, where the first indication information indicates at least one of the following that: the UE is allowed to perform ranging, the UE is allowed to perform sidelink positioning, resource scheduling is performed when the UE performs ranging, and resource scheduling is performed when the UE performs sidelink positioning. The QoS parameter for ranging is used by the radio access network device for resource scheduling when the UE performs ranging, and the QoS parameter for sidelink positioning is used by the radio access network device for resource scheduling when the UE performs sidelink positioning. The ranging authorization information indicates to allow the UE to perform ranging, and the sidelink positioning authorization information indicates to allow the UE to perform sidelink positioning.

A fifth aspect provides a parameter configuration method. The method is performed by a communication system. The communication system includes at least one of the first network element according to the second aspect, the second network element according to the third aspect, the radio access network device according to the fourth aspect, and the UE according to the first aspect. The system may perform the parameter configuration method according to the first aspect, and at least one of the parameter configuration method according to the second aspect, the third aspect, and the fourth aspect.

A sixth aspect provides a parameter configuration apparatus. The apparatus includes a sending module and a receiving module. The sending module is configured to send target information to a network side device. The target information is used to request for a target parameter for ranging and/or sidelink positioning, and the target information includes at least one of the following: capability information of user equipment UE about supporting ranging, capability information of the UE about supporting sidelink positioning, request information for a ranging policy, and request information for a sidelink positioning policy. The receiving module is configured to receive the target parameter sent by the network side device.

A seventh aspect provides a parameter configuration apparatus. The apparatus includes a receiving module and a sending module. The receiving module is configured to receive target information sent by UE. The target information is used by the UE to request for a target parameter for ranging and/or sidelink positioning, and the target information includes at least one of the following: capability information of the UE about supporting ranging, capability information of the UE about supporting sidelink positioning, request information for a ranging policy, and request information for a sidelink positioning policy. The sending module is configured to send the target information to a second network element in a network side device. The target parameter includes at least one of the following: an identifier of a PLMN authorized for ranging, an identifier of a PLMN authorized for positioning, a service authorized for ranging and an identifier of a target layer corresponding to the service authorized for ranging, a service authorized for positioning and an identifier of a target layer corresponding to the service authorized for positioning, a service security parameter, a discovery parameter, a QoS parameter, and an AS configuration parameter.

An eighth aspect provides a parameter configuration apparatus. The apparatus includes a receiving module, a determining module, and a sending module. The receiving module is configured to receive target information sent by UE. The target information is used by the UE to request for a target parameter for ranging and/or sidelink positioning, and the target information includes at least one of the following: capability information of the UE about supporting ranging, capability information of the UE about supporting sidelink positioning, request information for a ranging policy, and request information for a sidelink positioning policy. The determining module is configured to determine the target parameter based on the target information. The sending module is configured to send the target parameter to the UE. The target parameter includes at least one of the following: an identifier of a PLMN authorized for ranging, an identifier of a PLMN authorized for positioning, a service authorized for ranging and an identifier of a target layer corresponding to the service authorized for ranging, a service authorized for positioning and an identifier of a target layer corresponding to the service authorized for positioning, a service security parameter, a discovery parameter, a QoS parameter, and an AS configuration parameter.

A ninth aspect provides a parameter configuration apparatus. The apparatus includes a receiving module, a determining module, and a sending module. The receiving module is configured to receive second information sent by a first network element in a network side device. The second information includes at least one of the following: a QoS parameter for ranging, a QoS parameter for sidelink positioning, ranging authorization information, and sidelink positioning authorization information. The determining module is configured to determine first indication information based on the second information. The first indication information indicates at least one of the following that: The UE is allowed to perform ranging, the UE is allowed to perform sidelink positioning, resource scheduling is performed when the UE performs ranging, and resource scheduling is performed when the UE performs sidelink positioning. The sending module is configured to send the first indication information to the UE. The QoS parameter for ranging is used by a radio access network device for resource scheduling when the UE performs ranging, and the QoS parameter for sidelink positioning is used by the radio access network device for resource scheduling when the UE performs sidelink positioning. The ranging authorization information indicates to allow the UE to perform ranging, and the sidelink positioning authorization information indicates to allow the UE to perform sidelink positioning.

A tenth aspect provides a parameter configuration system. The parameter configuration system includes at least one of the parameter configuration apparatuses according to the seventh aspect to the ninth aspect, and the parameter configuration apparatus according to the sixth aspect.

An eleventh aspect provides LTE. The UE includes a processor and a memory. A program or instructions are stored in the memory and executable on the processor, and when the program or the instructions are executed by the processor, steps of the method according to the first aspect are implemented.

A twelfth aspect provides a network side device. The network side device includes a processor and a memory. A program or instructions are stored in the memory and executable on the processor, and when the program or the instructions are executed by the processor, steps of the method according to the second aspect are implemented, steps of the method according to the third aspect are implemented, or steps of the method according to the fourth aspect are implemented.

A thirteenth aspect provides LTE, including a processor and a communication interface: The communication interface is configured to: send target information to a network side device, where the target information is used to request for a target parameter for ranging and/or sidelink positioning, and the target information includes at least one of the following: capability information of the UE about supporting ranging, capability information of the UE about supporting sidelink positioning, request information for a ranging policy, and request information for a sidelink positioning policy; and receive the target parameter sent by the network side device.

A fourteenth aspect provides a network side device, including a processor and a communication interface. The communication interface is configured to be used by a first network element to receive target information sent by UE and send the target information to a second network element. Alternatively, the communication interface is configured to be used by a second network element to receive target information sent by UE, determine a target parameter based on the target information, and send the target parameter to the UE. Alternatively, the communication interface is configured to be used by a radio access network device to receive second information sent by a first network element, determine first indication information based on the second information, and send the first indication information to the LTE, where the second information includes at least one of the following: a QoS parameter for ranging, a QoS parameter for sidelink positioning, ranging authorization information, and sidelink positioning authorization information. The QoS parameter for ranging is used by the radio access network device for resource scheduling when the UE performs ranging, the QoS parameter for sidelink positioning is used by the radio access network device for resource scheduling when the UE performs sidelink positioning, the ranging authorization information indicates to allow the UE to perform ranging, and the sidelink positioning authorization information indicates to allow the UE to perform sidelink positioning. The first indication information indicates at least one of the following that: The UE is allowed to perform ranging, the UE is allowed to perform sidelink positioning, resource scheduling is performed when the UE performs ranging, and resource scheduling is performed when the UE performs sidelink positioning. The target information is used to request for a target parameter for ranging and/or sidelink positioning, and the target information includes at least one of the following: capability information of the UE about supporting ranging, capability information of the UE about supporting sidelink positioning, request information for a ranging policy, and request information for a sidelink positioning policy. The target parameter includes at least one of the following: an identifier of a PLMN authorized for ranging, an identifier of a PLMN authorized for positioning, a service authorized for ranging and an identifier of a target layer corresponding to the service authorized for ranging, a service authorized for positioning and an identifier of a target layer corresponding to the service authorized for positioning, a service security parameter, a discovery parameter, a QoS parameter, and an AS configuration parameter.

A fifteenth aspect provides a communication system, including UE and a network side device. The UE may be configured to perform steps of the parameter configuration method according to the first aspect, and the network side device may be configured to perform at least one of the following: steps of the parameter configuration method according to the second aspect, steps of the parameter configuration method according to the third aspect, and steps of the parameter configuration method according to the fourth aspect.

A sixteenth aspect provides a readable storage medium. The readable storage medium stores a program or instructions, and when the program or the instructions are executed by a processor, steps of the method according to the first aspect are implemented, steps of the method according to the second aspect are implemented, steps of the method according to the third aspect are implemented, or steps of the method according to the fourth aspect are implemented.

A seventeenth aspect provides a chip. The chip includes a processor and a communication interface. The communication interface is coupled to the processor, and the processor is configured to run a program or instructions to implement the method according to the first aspect, the method according to the second aspect, the method according to the third aspect, or the method according to the fourth aspect.

An eighteenth aspect provides a computer program/program product. The computer program/program product is stored in a storage medium, and the computer program/program product is executed by at least one processor to implement steps of the parameter configuration method according to the first aspect, steps of the parameter configuration method according to the second aspect, steps of the parameter configuration method according to the third aspect, steps of the parameter configuration method according to the fourth aspect, or steps of the parameter configuration method according to the fifth aspect.

In embodiments of this application, the UE may send the target information to the network side device, to request for the target parameter for ranging and/or sidelink positioning, where the target information includes at least one of the following: the capability information of the UE about supporting ranging, the capability information of the UE about supporting sidelink positioning, the request information for a ranging policy, and the request information for a sidelink positioning policy; and the UE may receive the target parameter sent by the network side device. In this solution, when the UE requires to perform ranging and/or sidelink positioning or before the UE performs ranging and/or sidelink positioning, the UE may send information related to ranging and/or sidelink positioning to the network side device, so that the network side device determines a parameter for ranging and/or sidelink positioning based on the information, and sends the parameter to the UE. In this way, the UE can obtain the parameter for ranging and/or sidelink positioning and perform ranging and/or sidelink positioning.

### BRIEF DESCRIPTION OF DRAWINGS

FIG. 1 is a schematic diagram of an architecture of a communication system according to an embodiment of this application;
FIG. 2 is a first flowchart of a parameter configuration method according to an embodiment of this application;
FIG. 3 is a second flowchart of a parameter configuration method according to an embodiment of this application;
FIG. 4 is a third flowchart of a parameter configuration method according to an embodiment of this application;
FIG. 5 is a fourth flowchart of a parameter configuration method according to an embodiment of this application;
FIG. 6 is a first schematic diagram of a structure of a parameter configuration apparatus according to an embodiment of this application;
FIG. 7 is a second schematic diagram of a structure of a parameter configuration apparatus according to an embodiment of this application;
FIG. 8 is a third schematic diagram of a structure of a parameter configuration apparatus according to an embodiment of this application;
FIG. 9 is a fourth schematic diagram of a structure of a parameter configuration apparatus according to an embodiment of this application;
FIG. 10 is a schematic diagram of a hardware structure of a communication device according to an embodiment of this application;
FIG. 11 is a schematic diagram of a hardware structure of UE according to an embodiment of this application;
FIG. 12 is a first schematic diagram of a hardware structure of a network side device according to an embodiment of this application; and
FIG. 13 is a second schematic diagram of a hardware structure of a network side device according to an embodiment of this application.

### DESCRIPTION OF EMBODIMENTS

The following clearly describes technical solutions in embodiments of this application with reference to the accompanying drawings in embodiments of this application. Apparently, the described embodiments are some but not all of embodiments of this application. All other embodiments obtained by a person of ordinary skill in the art based on embodiments of this application shall fall within the protection scope of this application.

The terms "first", "second", and the like in the description and the claims of this application are used to distinguish between similar objects instead of describing a specific order or sequence. It should be understood that the terms used in this way are interchangeable in appropriate circumstances such that embodiments of this application can be implemented in other orders that are not the order illustrated or described herein. In addition, objects distinguished by "first" and "second" are generally of a same type, and the number of objects is not limited, for example, there may be one or more first objects. In addition, in the description and the claims, "and/or" represents at least one of connected objects, and a character "/" generally represents an "or" relationship between associated objects.

It should be noted that technologies described in embodiments of this application are not limited to a Long Time Evolution (Long Time Evolution, LTE)/LTE-Advanced (LTE-Advanced, LTE-A) system, and may further be applied to other wireless communication systems such as Code Division Multiple Access (Code Division Multiple Access, CDMA), Time Division Multiple Access (Time Division Multiple Access, TDMA), Frequency Division Multiple Access (Frequency Division Multiple Access, FDMA), Orthogonal Frequency Division Multiple Access (Orthogonal Frequency Division Multiple Access, OFDMA), single-carrier frequency division multiple access (Single-carrier Frequency Division Multiple Access, SC-FDMA), and other systems. The terms "system" and "network" in embodiments of this application may be used interchangeably. The described technologies may be applied to both the systems and the radio technologies mentioned above as well as to other systems and radio technologies. A new radio (New Radio, NR) system is described in the following description for illustrative purposes, and the NR terminology is used in most of the following descriptions, although these technologies can also be applied to applications other than the NR system application, such as the 6^{th} generation (6^{th} Generation, 6G) communication system.

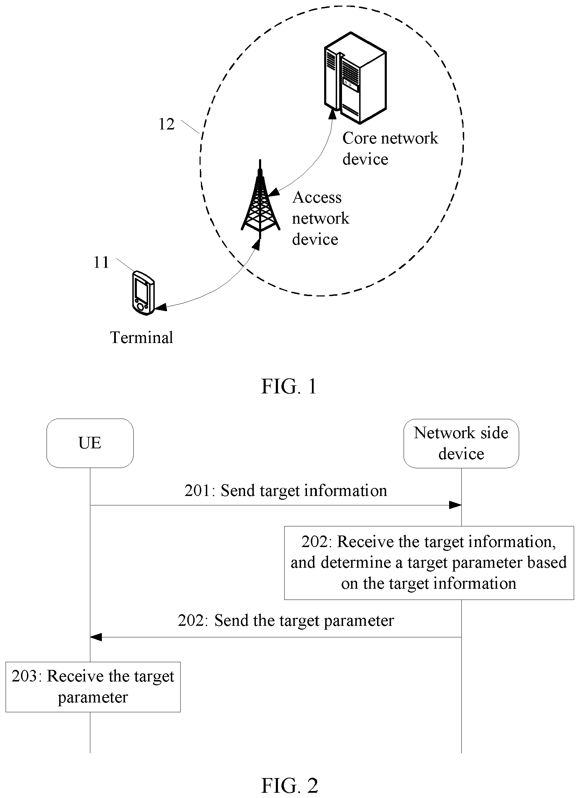

FIG. 1 is a block diagram of a wireless communication system to which an embodiment of this application is applicable. The wireless communication system includes a terminal 11 and a network side device 12. The terminal 11 may also be referred to as a terminal device or a user equipment (User Equipment, UE). The terminal 11 may be a terminal side device, for example, a mobile phone, a tablet personal computer (Tablet Personal Computer), a laptop computer (Laptop Computer) or notebook computer, a personal digital assistant (Personal Digital Assistant, PDA), a palmtop computer, a netbook, an ultra-mobile personal computer (ultra-mobile personal computer, UMPC), a mobile internet device (Mobile Internet Device, MID), an augmented reality (augmented reality, AR)/virtual reality (virtual reality, VR) device, a robot, a wearable device (Wearable Device), vehicle user equipment (VLTE), pedestrian user equipment (PUE), a smart home (a household device with a wireless communication function, for example, a refrigerator, a television, a washing machine, or furniture), a gaming machine, a personal computer (personal computer, PC), a teller machine, or a self-service machine. The wearable device includes a smart watch, a smart band, a smart headset, smart glasses, smart jewelry (a smart bangle, a smart bracelet, a smart ring, a smart necklace, a smart anklet, a smart ankle chain, or the like), a smart wrist strap, smart clothing, and the like. It should be noted that a specific type of the terminal 11 is not limited in embodiments of this application. The network side device 12 may include an access network device or a core network device. The access network device 12 may also be referred to as a radio access network device, a radio access network (Radio Access Network, RAN), a radio access network function, or a radio access network unit. The access network device 12 may include a base station, a WLAN access point, a Wi-Fi node, and the like. The base station may be referred to as a NodeB, an evolved NodeB (eNB), an access point, a base transceiver station (Base Transceiver Station, BTS), a radio base station, a radio transceiver, a basic service set (Basic Service Set, BSS), an extended service set (Extended Service Set, ESS), a home NodeB, a home evolved NodeB, a transmission and reception point (Transmission and Reception Point, TRP), or another appropriate term in the art. As long as same technical effect is achieved, the base station is not limited to a specified technical term. It should be noted that, in embodiments of this application, only a base station in an NR system is used as an example, but a specific type of the base station is not limited. The core network device may include but is not limited to at least one of the following: a core network node, a core network function, a mobility management entity (Mobility Management Entity, MME), an access and mobility management function (Access and Mobility Management Function, AMF), a session management function (Session Management Function, SMF), a user plane function (User Plane Function, UPF), a policy control function (Policy Control Function, PCF), a policy and charging rules function (Policy and Charging Rules Function, PCRF), an edge application server discovery function (Edge Application Server Discovery Function, EASDF), a unified data management (Unified Data Management, UDM), a unified data repository (Unified Data Repository, UDR), a home subscriber server (Home Subscriber Server, HSS), a centralized network configuration (Centralized network configuration, CNC), a network repository function (Network Repository Function, NRF), a network exposure function (Network Exposure Function, NEF), a local NEF (Local NEF or L-NEF), a binding support function (Binding Support Function, BSF), an application function (Application Function, AF), and the like. It should be noted that, in embodiments of this application, only a core network device in an NR system is used as an example for description, and a specific type of the core network device is not limited.

The following describes in detail the parameter configuration method provided in embodiments of this application with some embodiments and application scenarios thereof with reference to the accompanying drawings.

At present, for research on a 5G core network enhancement function to support ranging and sidelink positioning services within a 5G network coverage area, within a part of the coverage area, and beyond the coverage area, authorization and policy parameters used for the ranging and sidelink positioning services may be configured for one UE or one UE group, so that the UE can be authorized and executes the ranging and sidelink positioning services based on the corresponding policy parameters. When the UE requires to execute the ranging and sidelink positioning services or before the UE executes the ranging and sidelink positioning services, how to obtain the authorization and policy parameters used for the ranging and sidelink positioning services is an urgent problem to be solved.

In embodiments of this application, the UE may send target information to a network side device, to request for a target parameter for ranging and/or sidelink positioning, where the target information includes at least one of the following: capability information of the UE about supporting ranging, capability information of the UE about supporting sidelink positioning, request information for a ranging policy, and request information for a sidelink positioning policy. The network side device may determine the target parameter for ranging and/or sidelink positioning, and send the target parameter to the UE, so that the UE can receive the target parameter sent by the network side device. According to this solution, when the UE requires to perform ranging and/or sidelink positioning or before the UE performs ranging and/or sidelink positioning, the UE may send information related to ranging and/or sidelink positioning to the network side device, so that the network side device determines a parameter for ranging and/or sidelink positioning based on the information, and sends the parameter to the UE. In this way, the UE can obtain the parameter for ranging and/or sidelink positioning and perform ranging and/or sidelink positioning.

An embodiment of this application provides a parameter configuration method, and FIG. 2 is a flowchart of the parameter configuration method according to this embodiment of this application. As shown in FIG. 2, the parameter configuration method provided in this embodiment of this application may include the following step 201 to step 203.

Step 201: UE sends target information to a network side device.

In this embodiment of this application, the target information is used to request for a target parameter for ranging and/or sidelink positioning, and the target information includes at least one of the following: capability information of the UE about supporting ranging, capability information of the UE about supporting sidelink positioning, request information for a ranging policy, and request information for a sidelink positioning policy.

Optionally, in this embodiment of this application, the capability information of the UE about supporting ranging may be understood as that the UE has a capability to provide a ranging service, for example, a capability to determine a distance between UE by using a technology for detecting signal strength or a signal receiving time cycle; the capability information of the UE about supporting sidelink positioning may be understood as that the UE has a capability to provide a sidelink positioning service, for example, a capability to determine a location of the UE based on information, for example, signals received over a sidelink from different directions; the request information for a ranging policy may be indication information for the UE requiring to perform ranging, and is used to request the network side device to provide a ranging policy parameter and the like; and the request information for a sidelink positioning policy may be indication information for the UE requiring to perform sidelink positioning, and is used to request the network side device to provide a sidelink positioning policy parameter and the like.

Optionally, in this embodiment of this application, the network side device includes at least one of the following: a first network element, and a second network element.

Optionally, in this embodiment of this application, the first network element may be an AMF, and the second network element may be a PCF. The first network element and the second network element may alternatively be any other possible network elements, and may be specifically determined based on an actual use requirement. This is not limited in embodiments of this application.

Optionally, in this embodiment of this application, the target parameter includes at least one of the following: an identifier of a public land mobile network (Public Land Mobile Network, PLMN) authorized for ranging, an identifier of a PLMN authorized for positioning, a service authorized for ranging and an identifier of a target layer corresponding to the service authorized for ranging, a service authorized for positioning and an identifier of a target layer corresponding to the service authorized for positioning, a service security parameter, a discovery parameter, a quality of service (Quality of Service, QoS) parameter, and an access stratum (Access Stratum, AS) configuration parameter.

It should be noted that the target parameter may include an authorization parameter and/or a policy parameter. The authorization parameter includes at least one of the following: the identifier of the PLMN authorized for ranging, the identifier of the PLMN authorized for positioning, the service authorized for ranging and the identifier of the target layer corresponding to the service, and the service authorized for positioning and the identifier of the target layer corresponding to the service. The policy parameter includes at least one of the following: the service security parameter, the discovery parameter, the QoS parameter, and the AS configuration parameter.

Optionally, in this embodiment of this application, the identifier of the target layer may be an identifier of a target layer 2, and may be specifically determined based on an actual use requirement. This is not limited in embodiments of this application.

Step 202: The network side device receives the target information sent by the UE, determines the target parameter based on the target information, and sends the target parameter to the UE.

It should be noted that a specific method in Step 202 is described in the following embodiment, and details are not described herein.

Step 203: The UE receives the target parameter sent by the network side device.

This embodiment of this application provides the parameter configuration method, including: the UE may send the target information to the network side device, to request for the target parameter for ranging and/or sidelink positioning, where the target information includes at least one of the following: the capability information of the UE about supporting ranging, the capability information of the UE about supporting sidelink positioning, the request information for a ranging policy, and the request information for a sidelink positioning policy; and the UE may receive the target parameter sent by the network side device. In this solution, when the UE requires to perform ranging and/or sidelink positioning or before the UE performs ranging and/or sidelink positioning, the UE may send information related to ranging and/or sidelink positioning to the network side device, so that the network side device determines a parameter for ranging and/or sidelink positioning based on the information, and sends the parameter to the LTE. In this way, the UE can obtain the parameter for ranging and/or sidelink positioning and perform ranging and/or sidelink positioning.

The specific method in this embodiment of this application for the network side device to determine the target parameter based on the target information and send the target parameter to the UE is described below in two implementations.

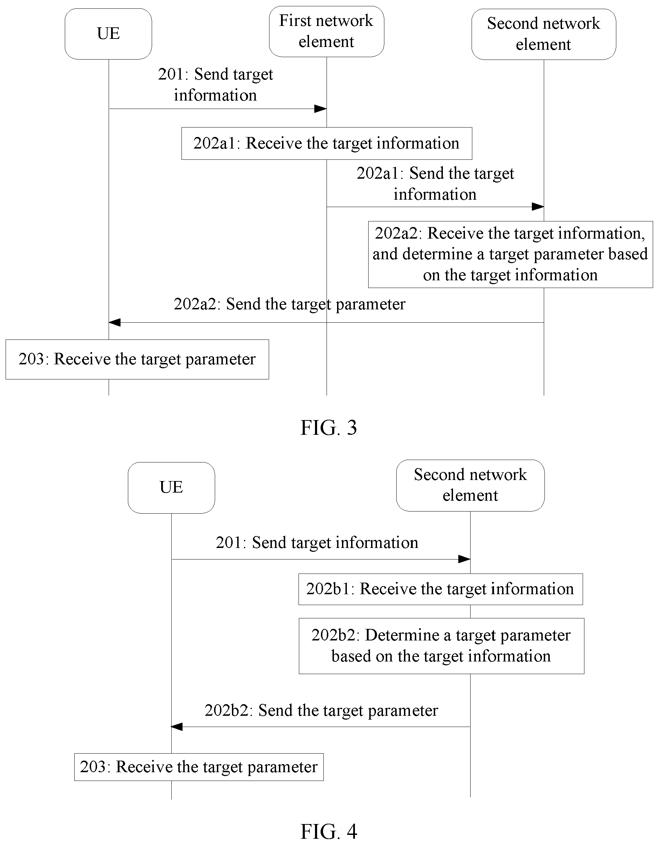

Optionally, in this embodiment of this application, in a first implementation, as shown in FIG. 3, when the network side device includes the first network element, step 202 may be specifically implemented through the following step 202a1 and step 202a2.

Step 202a1: The first network element in the network side device receives the target information sent by the LTE, and sends the target information to the second network element in the network side device.

Optionally, in this embodiment of this application, the target information is carried in a mobility management capability (Mobility Management capability, MM capability) container in a registration request message.

It can be understood that, that the first network element in the network side device receives the target information sent by the UE includes: The first network element receives the registration request message sent by the UE, where the mobility management capability container in the registration request message includes the target information.

Optionally, in this embodiment of this application, in a process in which the UE is registered with a network, the UE may send the registration request message to the first network element, and the first network element may receive the registration request message sent by the UE.

It should be noted that, as the target information is carried in the mobility management capability container in the registration request message, after receiving the registration request message, the first network element may parse the registration request message to obtain the target information, and send the target information to the second network element.

Optionally, in this embodiment of this application, that the target information is sent to the second network element in the network side device includes: an N1N2 message is sent to the second network element, where the N1N2 message includes the target information.

Step 202a2: The second network element receives the target information sent by the first network element, determines the target parameter based on the target information, and sends the target parameter to the UE.

Optionally, in this embodiment of this application, the second network element may trigger a configuration parameter update procedure to send the target parameter to the UE.

In this embodiment of this application, when the UE requires to perform ranging and/or sidelink positioning or before the UE performs ranging and/or sidelink positioning, the UE may send the information related to ranging and/or sidelink positioning to the network side device, and after receiving the information, the first network element may send the information to the second network element, so that the second network element determines the parameter for ranging and/or sidelink positioning based on the information, and sends the parameter to the UE. In this way, the UE may obtain the parameter for ranging and/or sidelink positioning and perform ranging and/or sidelink positioning.

Optionally, in this embodiment of this application, after "the first network element in the network side device receives the target information sent by the UE" in Step 202a1 and before "sends the target information to the second network element in the network side device" in Step 202a1, the parameter configuration method provided in this embodiment of this application further includes the following step 301.

Step 301: The first network element performs, based on the target information, at least one of the following: selecting the second network element that supports the UE in performing ranging and/or sidelink positioning, and querying a UDM network element for whether the UE is authorized to perform ranging and/or sidelink positioning.

Optionally, in this embodiment of this application, in a first manner, the first network element may select, based on the target information, the second network element that supports the UE in performing ranging and/or sidelink positioning; in a second manner, the first network element may query, based on the target information, the UDM network element for whether the UE is authorized to perform ranging and/or sidelink positioning; and in a third manner, based on the target information, the first network element may select the second network element that supports the UE in performing ranging and/or sidelink positioning, and query the UDM network element for whether the UE is authorized to perform ranging and/or sidelink positioning.

Optionally, in this embodiment of this application, in the second manner, the network side device considers, by default, all second network elements in the network side device support the UE in performing ranging and/or sidelink positioning, and therefore, the first network element may send the target information to any second network element.

It should be noted that querying the UDM network element for whether the UE is authorized to perform ranging and/or sidelink positioning may be understood as querying in UE registration information stored on the UDM network element for whether the UE is authorized to perform ranging and/or sidelink positioning.

Optionally, in this embodiment of this application, step 301 may be specifically implemented through the following step 301a. In addition, "sends the target information to the second network element in the network side device" in step 202a1 may be specifically implemented through the following step 202a1a.

Step 301a: The first network element selects, based on the target information, the second network element that supports the UE in performing ranging and/or sidelink positioning.

Step 202a1a: The first network element sends the target information to the selected second network element.

In this embodiment of this application, when the UE requires to perform ranging and/or sidelink positioning or before the UE performs ranging and/or sidelink positioning, the UE may send the information related to ranging and/or sidelink positioning to the network side device, and after receiving the information, the first network element may determine, based on the target information, the second network element that supports the UE in performing ranging and/or sidelink positioning, to send the information to the second network element. The second network element may determine the parameter for ranging and/or sidelink positioning based on the information, and send the parameter to the UE. In this way, the UE may obtain the parameter for ranging and/or sidelink positioning and perform ranging and/or sidelink positioning.

Optionally, in this embodiment of this application, in a second implementation, as shown in FIG. 4, when the network side device includes the second network element, step 202 may be specifically implemented through the following step 202b1 and step 202b2.

Step 202b1: The second network element in the network side device receives the target information sent by the UE.

Optionally, in this embodiment of this application, the target information meets at least one of the following that: The target information is carried in a UE policy container (UE policy container) in a registration request message, the target information is carried in a UE policy request message, and the target information is carried in a mobility management capability container in the registration request message.

It can be understood that, that the second network element in the network side device receives the target information sent by the UE includes: The second network element receives the registration request message sent by the UE, where the UE policy container in the registration request message includes the target information. Alternatively, that the second network element in the network side device receives the target information sent by the UE includes: The second network element receives the UE policy request message sent by the UE, where the UE policy request message includes the target information.

Optionally, in this embodiment of this application, in a process in which the UE is registered with a network, the UE may send the registration request message to the network side device, and the network side device receives the registration request message sent by the UE; and after the UE is registered with the network, the UE may send the UE policy request message to the network side device, and the network side device receives the UE policy request message sent by the UE.

It should be noted that, when the target information is carried in the mobility management capability container in the registration request message, that the second network element in the network side device receives the target information sent by the UE includes: The second network element receives the target information sent by the first network element. For details, refer to related descriptions in step 202a1 and step 202a2 in the foregoing embodiment. Details are not described herein again.

Optionally, in this embodiment of this application, when the target information is carried in the UE policy container in the registration request message, the first network element forwards the UE policy container in the registration request message to the second network element through transparent transmission. In other words, the first network element does not parse the UE policy container in the registration request message, but directly forwards the UE policy container in the registration request message to the second network element.

Optionally, in this embodiment of this application, when the target information includes at least one of the capability information of the UE about supporting ranging and the capability information of the UE about supporting sidelink positioning, and the target information includes at least one of the request information for a ranging policy and the request information for a sidelink positioning policy, at least one of the capability information of the UE about supporting ranging and the capability information of the UE about supporting sidelink positioning may be carried in the mobility management capability container in the registration request message, and at least one of the request information for a ranging policy and the request information for a sidelink positioning policy may be carried in the UE policy container in the registration request message.

Step 202b2: The second network element determines the target parameter based on the target information, and sends the target parameter to the UE.

Optionally, in this embodiment of this application, the second network element may trigger a configuration parameter update procedure to send the target parameter to the UE. Alternatively, the second network element may send a policy parameter configuration command to the UE, and the policy parameter configuration command includes the target parameter. This may be specifically determined based on an actual use requirement, and is not limited in embodiments of this application.

In this embodiment of this application, when the UE requires to perform ranging and/or sidelink positioning or before the UE performs ranging and/or sidelink positioning, the UE may send the information related to ranging and/or sidelink positioning to the second network element, so that the second network element determines the parameter for ranging and/or sidelink positioning based on the information, and sends the parameter to the UE. In this way, the UE may obtain the parameter for ranging and/or sidelink positioning and perform ranging and/or sidelink positioning.

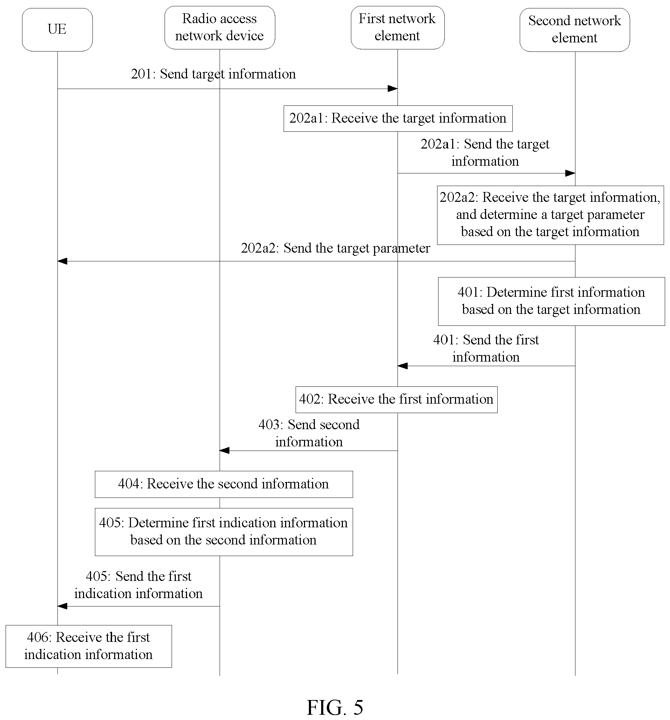

Optionally, in this embodiment of this application, as shown in FIG. 5, the network side device includes a radio access network device, and after "the second network element receives the target information sent by the first network element" in Step 202a2 or after step 202b1, the parameter configuration method provided in this embodiment of this application further includes the following step 401 to step 406.

Step 401: The second network element determines first information based on the target information, and sends the first information to the first network element.

In this embodiment of this application, the first information includes at least one of the following: a QoS parameter for ranging, and a QoS parameter for sidelink positioning. The QoS parameter for ranging is used by the radio access network device for resource scheduling when the UE performs ranging, and the QoS parameter for sidelink positioning is used by the radio access network device for resource scheduling when the UE performs sidelink positioning.

It should be noted that, for a sequence of performing step 401 and "determining the target parameter based on the target information", the second network element may determine the target parameter based on the target information while performing step 401; may first determine the target parameter based on the target information and then perform step 401; or may first perform step 401 and then determine the target parameter based on the target information.

Step 402: The first network element receives the first information sent by the second network element.

Step 403: The first network element sends second information to the radio access network device.

In this embodiment of this application, the second information includes at least one of the following: the first information, ranging authorization information, and sidelink positioning authorization information. The ranging authorization information indicates to allow the UE to perform ranging, and the sidelink positioning authorization information indicates to allow the UE to perform sidelink positioning.

Step 404: The radio access network device receives the second information sent by the first network element.

Step 405: The radio access network device determines first indication information based on the second information, and sends the first indication information to the UE.

In this embodiment of this application, the first indication information indicates at least one of the following that: The UE is allowed to perform ranging, the UE is allowed to perform sidelink positioning, resource scheduling is performed when the UE performs ranging, and resource scheduling is performed when the UE performs sidelink positioning.

Step 406: The UE receives the first indication information sent by the radio access network device.

In this embodiment of this application, as the radio access network device may determine one piece of indication information based on the second information (at least one of the QoS parameter for ranging, the QoS parameter for sidelink positioning, the ranging authorization information, and the sidelink positioning authorization information), and send the indication information to the UE. The indication information indicates at least one of the following: The UE is allowed to perform ranging, the UE is allowed to perform sidelink positioning, resource scheduling is performed when the UE performs ranging, and resource scheduling is performed when the UE performs sidelink positioning. In this way, the UE can more accurately perform ranging and/or sidelink positioning based on the indication information while obtaining the parameter for ranging and/or sidelink positioning.

Optionally, in this embodiment of this application, after step 402, the parameter configuration method provided in this embodiment of this application further includes the following step 501.

Step 501: The first network element stores the first information in context of the UE.

It can be understood that the first network element may store the first information in context information, of the UE, on the first network element.

The parameter configuration method provided in this embodiment of this application may be performed by a parameter configuration apparatus. In embodiments of this application, an example in which the parameter configuration apparatus performs the parameter configuration method is used to describe the parameter configuration apparatus provided in embodiments of this application.

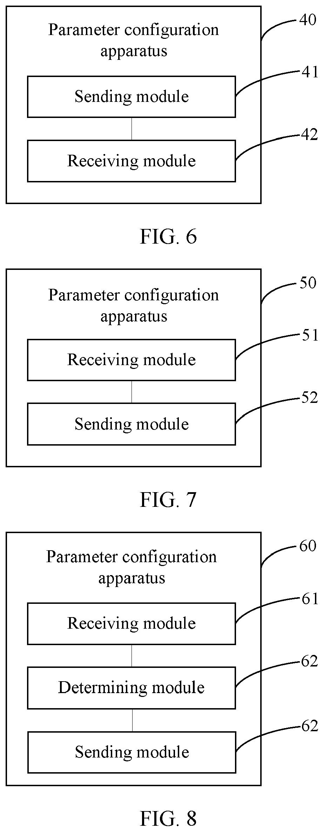

FIG. 6 is a first schematic diagram of a structure of a parameter configuration apparatus according to an embodiment of this application. As shown in FIG. 6, the parameter configuration apparatus 40 may include a sending module 41 and a receiving module 42.

The sending module 41 is configured to send target information to a network side device, where the target information is used to request for a target parameter for ranging and/or sidelink positioning, and the target information includes at least one of the following: capability information of user equipment UE about supporting ranging, capability information of the UE about supporting sidelink positioning, request information for a ranging policy, and request information for a sidelink positioning policy. The receiving module 42 is configured to receive the target parameter sent by the network side device.

In a possible implementation, the network side device includes at least one of the following: a first network element, and a second network element.

In a possible implementation, when the network side device includes the first network element, the target information is carried in a mobility management capability container in a registration request message.

In a possible implementation, when the network side device includes the second network element, the target information meets at least one of the following that: The target information is carried in a UE policy container in a registration request message, the target information is carried in a UE policy request message, and the target information is carried in a mobility management capability container in the registration request message.

In a possible implementation, the target parameter includes at least one of the following: an identifier of a PLMN authorized for ranging, an identifier of a PLMN authorized for positioning, a service authorized for ranging and an identifier of a target layer corresponding to the service authorized for ranging, a service authorized for positioning and an identifier of a target layer corresponding to the service authorized for positioning, a service security parameter, a discovery parameter, a QoS parameter, and an AS configuration parameter.

In a possible implementation, the network side device includes a radio access network device. The receiving module 42 is further configured to receive, after the target parameter sent by the network side device is received, first indication information sent by the radio access network device. The first indication information indicates at least one of the following that: The UE is allowed to perform ranging, the UE is allowed to perform sidelink positioning, resource scheduling is performed when the UE performs ranging, and resource scheduling is performed when the UE performs sidelink positioning.

This embodiment of this application provides the parameter configuration apparatus. When the UE requires to perform ranging and/or sidelink positioning or before the UE performs ranging and/or sidelink positioning, the UE may send information related to ranging and/or sidelink positioning to the network side device, so that the network side device determines a parameter for ranging and/or sidelink positioning based on the information, and sends the parameter to the UE. In this way, the parameter for ranging and/or sidelink positioning can be obtained, and ranging and/or sidelink positioning is performed.

The parameter configuration apparatus in this embodiment of this application may be an electronic device, for example, an electronic device with an operating system; or may be a component in an electronic device, for example, an integrated circuit or a chip. The electronic device may be UE, or another device that is not UE. For example, the UE may include but is not limited to the foregoing listed types of the terminal 11. The another device may be a server, a network attached storage (Network Attached Storage, NAS), or the like. This is not specifically limited in embodiments of this application.

The parameter configuration apparatus provided in this embodiment of this application can implement processes implemented by the UE in the foregoing method embodiments, and achieve same technical effect. To avoid repetition, details are not described herein again.

FIG. 7 is a second schematic diagram of a structure of a parameter configuration apparatus according to an embodiment of this application. As shown in FIG. 7, the parameter configuration apparatus 50 may include a receiving module 51 and a sending module 52.

The receiving module 51 is configured to receive target information sent by UE. The target information is used by the UE to request for a target parameter for ranging and/or sidelink positioning, and the target information includes at least one of the following: capability information of the UE about supporting ranging, capability information of the UE about supporting sidelink positioning, request information for a ranging policy, and request information for a sidelink positioning policy. The sending module 52 is configured to send the target information to a second network element in a network side device. The target parameter includes at least one of the following: an identifier of a PLMN authorized for ranging, an identifier of a PLMN authorized for positioning, a service authorized for ranging and an identifier of a target layer corresponding to the service authorized for ranging, a service authorized for positioning and an identifier of a target layer corresponding to the service authorized for positioning, a service security parameter, a discovery parameter, a QoS parameter, and an AS configuration parameter.

In a possible implementation, the target information is carried in a mobility management capability container in a registration request message.

In a possible implementation, the parameter configuration apparatus 50 further includes a performing module. The performing module is configured to perform, based on the target information, after the receiving module 51 receives the target information sent by the UE and before the sending module 52 sends the target information to the second network element in the network side device, at least one of the following: selecting the second network element that supports the UE in performing ranging and/or sidelink positioning, and querying a UDM network element for whether the UE is authorized to perform ranging and/or sidelink positioning.

In a possible implementation, the performing module is specifically configured to select, based on the target information, the second network element that supports the UE in performing ranging and/or sidelink positioning. The sending module 52 is specifically configured to send the target information to the selected second network element.

In a possible implementation, the receiving module 51 is further configured to receive, after the sending module 52 sends the target information to the second network element in the network side device, first information sent by the second network element. The first information includes at least one of the following: a QoS parameter for ranging, and a QoS parameter for sidelink positioning. The QoS parameter for ranging is used by a radio access network device in the network side device for resource scheduling when the UE performs ranging, and the QoS parameter for sidelink positioning is used by the radio access network device for resource scheduling when the UE performs sidelink positioning.

In a possible implementation, the sending module 52 is further configured to send, after the receiving module 51 receives the first information sent by the second network element, second information to the radio access network device. The second information includes at least one of the following: the first information, ranging authorization information, and sidelink positioning authorization information. The ranging authorization information indicates to allow the UE to perform ranging, and the sidelink positioning authorization information indicates to allow the UE to perform sidelink positioning.

In a possible implementation, the parameter configuration apparatus 50 further includes a storage module. The storage module is configured to store, after the receiving module 51 receives the first information sent by the second network element, the first information in context of the UE.

The parameter configuration apparatus in this embodiment of this application may be an apparatus or a network side device, or may be a component, an integrated circuit, or a chip in a network side device.

The parameter configuration apparatus provided in this embodiment of this application can implement processes implemented by the first network element in the foregoing method embodiments, and achieve same technical effect. To avoid repetition, details are not described herein again.

FIG. 8 is a third schematic diagram of a structure of a parameter configuration apparatus according to an embodiment of this application. As shown in FIG. 8, the parameter configuration apparatus 60 may include a receiving module 61, a determining module 62, and a sending module 63.

The receiving module 61 is configured to receive target information sent by UE. The target information is used by the UE to request for a target parameter for ranging and/or sidelink positioning, and the target information includes at least one of the following: capability information of the UE about supporting ranging, capability information of the UE about supporting sidelink positioning, request information for a ranging policy, and request information for a sidelink positioning policy. The determining module 62 is configured to determine the target parameter based on the target information. The sending module 63 is configured to send the target parameter to the UE. The target parameter includes at least one of the following: an identifier of a PLMN authorized for ranging, an identifier of a PLMN authorized for positioning, a service authorized for ranging and an identifier of a target layer corresponding to the service authorized for ranging, a service authorized for positioning and an identifier of a target layer corresponding to the service authorized for positioning, a service security parameter, a discovery parameter, a QoS parameter, and an AS configuration parameter.

In a possible implementation, the target information meets at least one of the following that: The target information is carried in a UE policy container in a registration request message, the target information is carried in a UE policy request message, and the target information is carried in a mobility management capability container in the registration request message.

In a possible implementation, when the target information is carried in the mobility management capability container in the registration request message, the receiving module 61 is specifically configured to receive the target information sent by a first network element in a network side device.

In a possible implementation, the determining module 62 is further configured to determine, after the receiving module 61 receives the target information sent by the UE, first information based on the target information. The sending module 62 is further configured to send first information to the first network element. The first information includes at least one of the following: a QoS parameter for ranging, and a QoS parameter for sidelink positioning. The QoS parameter for ranging is used by a radio access network device in the network side device for resource scheduling when the UE performs ranging, and the QoS parameter for sidelink positioning is used by the radio access network device for resource scheduling when the UE performs sidelink positioning.

The parameter configuration apparatus in this embodiment of this application may be an apparatus or a network side device, or may be a component, an integrated circuit, or a chip in a network side device.

The parameter configuration apparatus provided in this embodiment of this application can implement processes implemented by the second network element in the foregoing method embodiments, and achieve same technical effect. To avoid repetition, details are not described herein again.

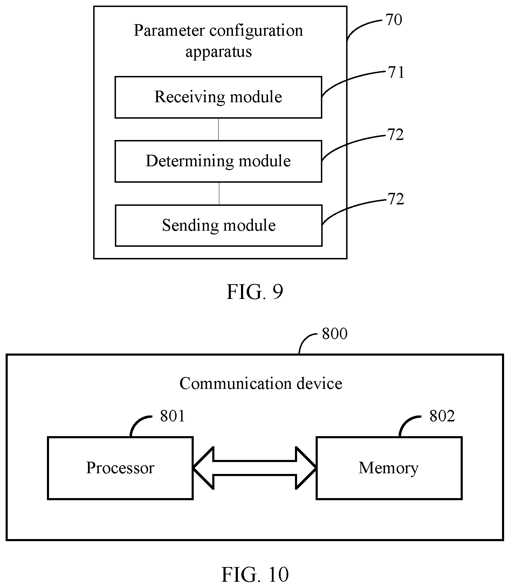

FIG. 9 is a fourth schematic diagram of a structure of a parameter configuration apparatus according to an embodiment of this application. As shown in FIG. 9, the parameter configuration apparatus 70 may include a receiving module 71, a determining module 72, and a sending module 73.

The receiving module 71 is configured to receive second information sent by a first network element in a network side device. The second information includes at least one of the following: a QoS parameter for ranging, a QoS parameter for sidelink positioning, ranging authorization information, and sidelink positioning authorization information. The determining module 72 is configured to determine first indication information based on the second information. The first indication information indicates at least one of the following that: The UE is allowed to perform ranging, the UE is allowed to perform sidelink positioning, resource scheduling is performed when the UE performs ranging, and resource scheduling is performed when the UE performs sidelink positioning. The sending module 73 is configured to send the first indication information to the UE. The QoS parameter for ranging is used by a radio access network device for resource scheduling when the UE performs ranging, and the QoS parameter for sidelink positioning is used by the radio access network device for resource scheduling when the UE performs sidelink positioning. The ranging authorization information indicates to allow the UE to perform ranging, and the sidelink positioning authorization information indicates to allow the UE to perform sidelink positioning.

The parameter configuration apparatus in this embodiment of this application may be an apparatus or a network side device, or may be a component, an integrated circuit, or a chip in a network side device.

The parameter configuration apparatus provided in this embodiment of this application can implement processes implemented by the radio access network device in the foregoing method embodiments, and achieve same technical effect. To avoid repetition, details are not described herein again.

Optionally, as shown in FIG. 10, an embodiment of this application further provides a communication device 800, including a processor 801 and a memory 802. A program or instructions are stored in the memory 802 and executable on the processor 801. For example, when the communication device 800 is UE, and when the program or the instructions are executed by the processor 801, steps implemented by the UE in the foregoing parameter configuration method embodiments are implemented, and same technical effect can be achieved. When the communication device 800 is a network side device, and when the program or the instructions are executed by the processor 801, steps implemented by the network side device in the foregoing parameter configuration method embodiments are implemented, and same technical effect can be achieved. To avoid repetition, details are not described herein again.

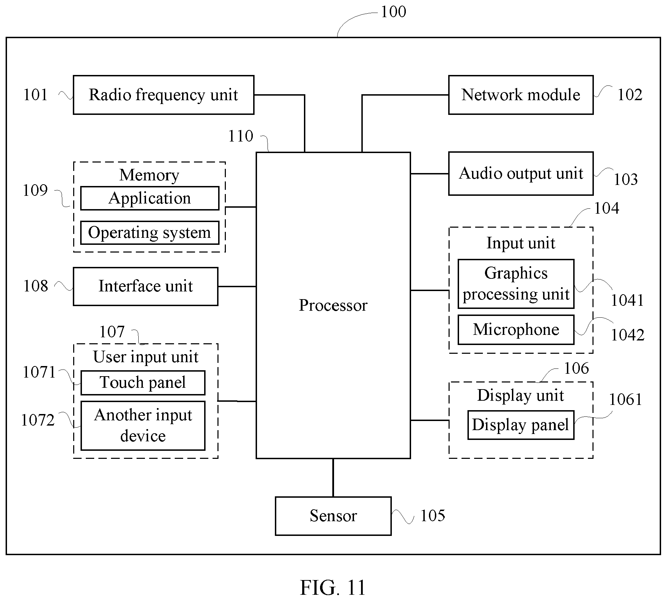

An embodiment of this application further provides LTE, including a processor and a communication interface: The communication interface is configured to: send target information to a network side device, where the target information is used to request for a target parameter for ranging and/or sidelink positioning, and the target information includes at least one of the following: capability information of the UE about supporting ranging, capability information of the UE about supporting sidelink positioning, request information for a ranging policy, and request information for a sidelink positioning policy; and receive the target parameter sent by the network side device. This UE embodiment corresponds to the foregoing method embodiments on a UE side. The implementation processes and implementations in the foregoing method embodiments may all be applicable to this UE embodiment, and same technical effect can be achieved. Specifically, FIG. 11 is a schematic diagram of a hardware structure of UE according to an embodiment of this application.

The UE 100 includes but is not limited to at least a part of components such as a radio frequency unit 101, a network module 102, an audio output unit 103, an input unit 104, a sensor 105, a display unit 106, a user input unit 107, an interface unit 108, a memory 109, and a processor 110.

A person skilled in the art can understand that the UE 100 may further include a power supply (for example, a battery) that supplies power to each component. The power supply may be logically connected to the processor 110 by using a power supply management system, to implement functions such as charging and discharging management, and power consumption management by using the power supply management system. The structure of the UE shown in FIG. 10 constitutes no limitation on the UE, and the UE may include more or fewer components than those shown in the figure, or combine some components, or have different component arrangements. Details are not described herein.

It should be understood that in this embodiment of this application, the input unit 104 may include a graphics processing unit (Graphics Processing Unit, GPU) 1041 and a microphone 1042. The graphics processing unit 1041 processes image data of a static picture or a video obtained by an image capture apparatus (for example, a camera) in a video capture mode or an image capture mode. The display unit 106 may include a display panel 1061. The display panel 1061 may be configured in a form of, for example, a liquid crystal display or an organic light-emitting diode. The user input unit 107 includes a touch panel 1071 and another input device 1072. The touch panel 1071 is also referred to as a touchscreen. The touch panel 1071 may include two parts: a touch detection apparatus and a touch controller. The another input device 1072 may include but is not limited to a physical keyboard, a functional button (for example, a volume control button or a power on/off button), a trackball, a mouse, and a joystick. Details are not described herein.

In this embodiment of this application, the radio frequency unit 101 receives downlink data from a network side device and then sends the downlink data to the processor 110 for processing; and sends uplink data to the network side device. Usually, the radio frequency unit 101 includes but is not limited to an antenna, at least one amplifier, a transceiver, a coupler, a low noise amplifier, a duplexer, and the like.

The memory 109 may be configured to store a software program or instructions and various data. The memory 109 may mainly include a program or instruction storage area and a data storage area. The program or instruction storage area may store an operating system, an application or an instruction required by at least one function (for example, a sound playing function or an image playing function), and the like. In addition, the memory 109 may be a volatile memory or a non-volatile memory, or the memory 109 may include a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synchlink dynamic random access memory (Synchlink DRAM, SLDRAM), and a direct rambus random access memory (Direct Rambus RAM, DRRAM). The memory 109 in this embodiment of this application includes but is not limited to these memories and any memory of another proper type.

The processor 110 may include one or more processing units. Optionally, an application processor and a modem processor are integrated into the processor 110. The application processor mainly processes an operating system, a user interface, an application, or the like. The modem processor mainly processes a wireless communication signal, for example, a baseband processor. It can be understood that the modem processor may alternatively not be integrated into the processor 110.

The radio frequency unit 101 is configured to send target information to a network side device, where the target information is used to request for a target parameter for ranging and/or sidelink positioning, and the target information includes at least one of the following: capability information of user equipment UE about supporting ranging, capability information of the UE about supporting sidelink positioning, request information for a ranging policy, and request information for a sidelink positioning policy. Optionally, the radio frequency unit 101 is configured to receive the target parameter sent by the network side device.

Optionally, the network side device includes at least one of the following: a first network element, and a second network element.

Optionally, when the network side device includes the first network element, the target information is carried in a mobility management capability container in a registration request message.

Optionally, when the network side device includes the second network element, the target information meets at least one of the following that: The target information is carried in a UE policy container in a registration request message, the target information is carried in a UE policy request message, and the target information is carried in a mobility management capability container in the registration request message.

Optionally, the target parameter includes at least one of the following: an identifier of a PLMN authorized for ranging, an identifier of a PLMN authorized for positioning, a service authorized for ranging and an identifier of a target layer corresponding to the service authorized for ranging, a service authorized for positioning and an identifier of a target layer corresponding to the service authorized for positioning, a service security parameter, a discovery parameter, a QoS parameter, and an AS configuration parameter.

Optionally, the network side device includes a radio access network device. The radio frequency unit 101 is further configured to receive, after the target parameter sent by the network side device is received, first indication information sent by the radio access network device. The first indication information indicates at least one of the following that: The UE is allowed to perform ranging, the UE is allowed to perform sidelink positioning, resource scheduling is performed when the UE performs ranging, and resource scheduling is performed when the UE performs sidelink positioning.

An embodiment of this application provides LTE. When the UE requires to perform ranging and/or sidelink positioning or before the UE performs ranging and/or sidelink positioning, the UE may send information related to ranging and/or sidelink positioning to the network side device, so that the network side device determines a parameter for ranging and/or sidelink positioning based on the information, and sends the parameter to the UE. In this way, the parameter for ranging and/or sidelink positioning can be obtained, and ranging and/or sidelink positioning is performed.

The UE provided in this embodiment of this application can implement processes implemented by the UE in the foregoing method embodiments, and achieve same technical effect. To avoid repetition, details are not described herein again.

An embodiment of this application further provides a network side device, including a processor and a communication interface. The communication interface is configured to be used by a first network element to receive target information sent by UE and send the target information to a second network element in the network side device. Alternatively, the communication interface is configured to be used by a second network element to receive target information sent by UE, determine a target parameter based on the target information, and send the target parameter to the LTE. Alternatively, the communication interface is configured to be used by a radio access network device to receive second information sent by a first network element, determine first indication information based on the second information, and send the first indication information to the LTE, where the second information includes at least one of the following: a QoS parameter for ranging, a QoS parameter for sidelink positioning, ranging authorization information, and sidelink positioning authorization information. The QoS parameter for ranging is used by the radio access network device for resource scheduling when the UE performs ranging, the QoS parameter for sidelink positioning is used by the radio access network device for resource scheduling when the UE performs sidelink positioning, the ranging authorization information indicates to allow the UE to perform ranging, and the sidelink positioning authorization information indicates to allow the UE to perform sidelink positioning. The first indication information indicates at least one of the following that: The UE is allowed to perform ranging, the UE is allowed to perform sidelink positioning, resource scheduling is performed when the UE performs ranging, and resource scheduling is performed when the UE performs sidelink positioning. The target information is used to request for a target parameter for ranging and/or sidelink positioning, and the target information includes at least one of the following: capability information of the UE about supporting ranging, capability information of the UE about supporting sidelink positioning, request information for a ranging policy, and request information for a sidelink positioning policy. The target parameter includes at least one of the following: an identifier of a PLMN authorized for ranging, an identifier of a PLMN authorized for positioning, a service authorized for ranging and an identifier of a target layer corresponding to the service authorized for ranging, a service authorized for positioning and an identifier of a target layer corresponding to the service authorized for positioning, a service security parameter, a discovery parameter, a QoS parameter, and an AS configuration parameter. This network side device embodiment is corresponding to the foregoing method embodiments of the network side device. Each implementation process and implementation of the foregoing method embodiments may be applicable to this network side device embodiment, and a same technical effect can be achieved.

Specifically, an embodiment of this application further provides a network side device. As shown in FIG. 11, the network side device 900 includes an antenna 91, a radio frequency apparatus 92, a baseband apparatus 93, a processor 94, and a memory 95. The antenna 91 is connected to the radio frequency apparatus 92. In an uplink direction, the radio frequency apparatus 92 receives information through the antenna 91, and sends the received information to the baseband apparatus 93 for processing. In a downlink direction, the baseband apparatus 93 processes information that needs to be sent, and sends processed information to the radio frequency apparatus 92. The radio frequency apparatus 92 processes the received information, and then sends processed information through the antenna 91.

In the foregoing embodiment, the method performed by the network side device may be implemented in a baseband apparatus 93. The baseband apparatus 93 includes a baseband processor.

The baseband apparatus 93 may include at least one baseband board. A plurality of chips are disposed on the baseband board. As shown in FIG. 11, one chip is, for example, a baseband processor, and is connected to the memory 95 through a bus interface, to invoke a program in the memory 95 to perform the operations of the radio access network device shown in the foregoing method embodiments.

The network side device may further include a network interface 96, and the interface is, for example, a common public radio interface (common public radio interface, CPRI).

Specifically, the network side device 900 in this embodiment of the present invention further includes instructions or a program stored in the memory 95 and executable on the processor 94. The processor 94 invokes the instructions or the program in the memory 95 to perform the method performed by the modules shown in FIG. 9, and a same technical effect is achieved. To avoid repetition, details are not described herein again.

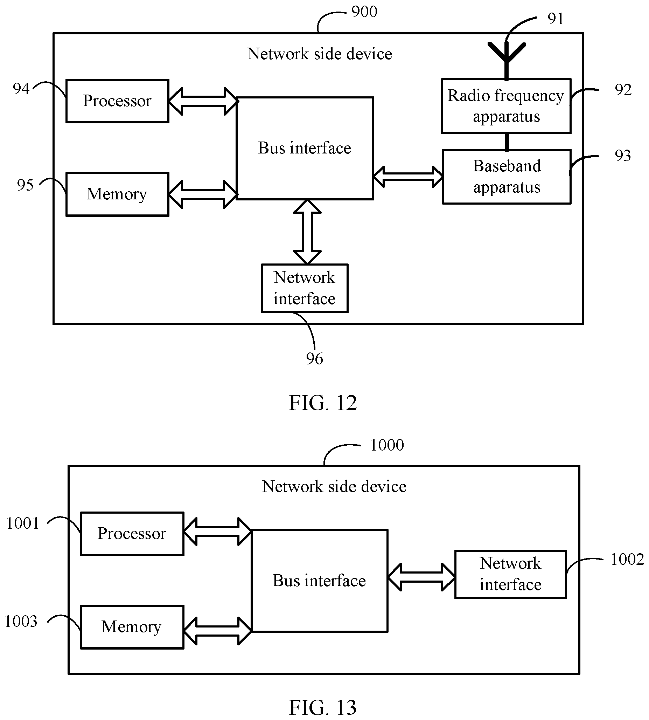

Specifically, an embodiment of this application further provides a network side device. As shown in FIG. 12, the network side device 1000 includes a processor 1001, a network interface 1002, and a memory 1003. The network interface 1002 is, for example, a common public radio interface (common public radio interface, CPRI).

Specifically, the network side device 1000 in this embodiment of the present invention further includes instructions or a program stored in the memory 1003 and executable on the processor 1001. The processor 1001 invokes the instructions or program in the memory 1003 to perform the method performed by the modules shown in FIG. 7 or FIG. 8, and same technical effect can be achieved. To avoid repetition, details are not described herein again.

An embodiment of this application further provides a readable storage medium. The readable storage medium stores a program or instructions, and the program or the instructions are executed by a processor to implement processes in the foregoing parameter configuration method embodiments, and same technical effect can be achieved. To avoid repetition, details are not described herein again.

The processor is a processor in the UE in the foregoing embodiments. The readable storage medium includes a computer-readable storage medium, for example, a computer read-only memory ROM, a random access memory RAM, a magnetic disk, or an optical disc.

An embodiment of this application further provides a chip. The chip includes a processor and a communication interface. The communication interface is coupled to the processor, and the processor is configured to run a program or instructions to implement processes in the foregoing parameter configuration method embodiments, and same technical effect can be achieved. To avoid repetition, details are not described herein again.

It should be understood that the chip mentioned in this embodiment of this application may also be referred to as a system-level chip, a system chip, a chip system, or a system on chip.

An embodiment of this application further provides a computer program/program product. The computer program/program product is stored in a storage medium, and the program/program product is executed by at least one processor to implement processes in the foregoing parameter configuration method embodiments, and same technical effect can be achieved. To avoid repetition, details are not described herein again.

An embodiment of this application further provides a communication system, including UE and a network side device. The UE may be configured to perform steps of the foregoing parameter configuration methods, and the network side device may be configured to perform steps of the foregoing parameter configuration methods.

It should be noted that, each embodiment and each implementation in this application may be implemented alone, or may be combined for implementation based on an actual case. Processes in a combined embodiment or implementation can achieve technical effect corresponding to the foregoing parameter configuration method. To avoid repetition, details are not described herein again.

It should be noted that, in this specification, the term "include", "comprise", or any other variant thereof is intended to cover a non-exclusive inclusion, so that a process, a method, an article, or an apparatus that includes a list of elements not only includes those elements but also includes other elements which are not expressly listed, or further includes elements inherent to this process, method, article, or apparatus. In absence of more constraints, an element preceded by a statement "includes a ..." does not preclude the presence of additional identical elements in the process, method, article, or apparatus that includes the element. In addition, it should be noted that the scope of the method and the apparatus in the implementations of this application is not limited to performing functions in an illustrated or discussed sequence, and may further include performing the functions in a basically simultaneous manner or in a reverse sequence based on the functions concerned. For example, the described method may be performed in an order different from the described order, and steps may be added, omitted, or combined. In addition, features described with reference to some examples may be combined in other examples.

Based on the descriptions of the foregoing implementations, a person skilled in the art may clearly understand that the method in the foregoing embodiment may be implemented by software in addition to a necessary universal hardware platform or by hardware only. In most circumstances, the former is a preferred implementation. Based on such an understanding, the technical solutions of this application essentially or the part contributing to the prior art may be implemented in a form of a computer software product. The computer software product is stored in a storage medium (for example, a ROM/RAM, a floppy disk, or an optical disc), and includes several instructions for instructing a terminal (which may be a mobile phone, a computer, a server, an air conditioner, a network device, or the like) to perform the methods described in embodiments of this application.

Embodiments of this application are described above with reference to the accompanying drawings. However, this application is not limited to the foregoing specific implementations. The foregoing specific implementations are only illustrative and not restrictive. Under the enlightenment of this application, a person of ordinary skill in the art can make many forms without departing from the purpose of this application and the protection scope of the claims, all of which fall within the protection of this application.

## Claims

1. A parameter configuration method, comprising:
sending, by a user equipment UE, target information to a network side device, wherein the target information is used to request for a target parameter for ranging and/or sidelink positioning, and the target information comprises at least one of the following: capability information of the UE about supporting ranging, capability information of the UE about supporting sidelink positioning, request information for a ranging policy, and request information for a sidelink positioning policy; and
receiving, by the UE, the target parameter sent by the network side device.

2. The method according to claim 1, wherein the network side device comprises at least one of the following: a first network element, and a second network element.

3. The method according to claim 2, wherein in a case that the network side device comprises the first network element, the target information is carried in a mobility management capability container in a registration request message.

4. The method according to claim 2, wherein in a case that the network side device comprises the second network element, the target information meets at least one of the following that: the target information is carried in a UE policy container in a registration request message, the target information is carried in a UE policy request message, and the target information is carried in a mobility management capability container in the registration request message.

5. The method according to any one of claims 1 to 4, wherein the target parameter comprises at least one of the following: an identifier of a public land mobile network PLMN authorized for ranging, an identifier of a PLMN authorized for positioning, a service authorized for ranging and an identifier of a target layer corresponding to the service authorized for ranging, a service authorized for positioning and an identifier of a target layer corresponding to the service authorized for positioning, a service security parameter, a discovery parameter, a quality of service QoS parameter, and an access stratum AS configuration parameter.

6. The method according to any one of claims 1 to 5, wherein the network side device comprises a radio access network device, and after the receiving, by the UE, the target parameter sent by the network side device, the method further comprises:
receiving, by the UE, first indication information sent by the radio access network device, wherein the first indication information indicates at least one of the following that: the UE is allowed to perform ranging, the UE is allowed to perform sidelink positioning, resource scheduling is performed when the UE performs ranging, and resource scheduling is performed when the UE performs sidelink positioning.

7. A parameter configuration method, comprising:
receiving, by a first network element in a network side device, target information sent by a user equipment UE, and sending the target information to a second network element in the network side device, wherein the target information is used by the UE to request for a target parameter for ranging and/or sidelink positioning, and the target information comprises at least one of the following: capability information of the UE about supporting ranging, capability information of the UE about supporting sidelink positioning, request information for a ranging policy, and request information for a sidelink positioning policy, wherein
the target parameter comprises at least one of the following: an identifier of a public land mobile network PLMN authorized for ranging, an identifier of a PLMN authorized for positioning, a service authorized for ranging and an identifier of a target layer corresponding to the service authorized for ranging, a service authorized for positioning and an identifier of a target layer corresponding to the service authorized for positioning, a service security parameter, a discovery parameter, a quality of service QoS parameter, and an access stratum AS configuration parameter.

8. The method according to claim 7, wherein the target information is carried in a mobility management capability container in a registration request message.

9. The method according to claim 7 or 8, wherein after the receiving, by a first network element in a network side device, target information sent by UE, and before the sending the target information to a second network element in the network side device, the method further comprises:
performing, by the first network element based on the target information, at least one of the following: selecting a second network element that supports the UE in performing ranging and/or sidelink positioning, and querying a unified data management UDM network element for whether the UE is authorized to perform ranging and/or sidelink positioning.

10. The method according to claim 9, wherein the performing, by the first network element based on the target information, at least one of the following comprises:
selecting, by the first network element based on the target information, the second network element that supports the UE in performing ranging and/or sidelink positioning; and
the sending the target information to a second network element in the network side device comprises:
sending, by the first network element, the target information to the second network element.

11. The method according to claim 9, wherein after the sending the target information to a second network element in the network side device, the method further comprises:
receiving, by the first network element, first information sent by the second network element, wherein the first information comprises at least one of the following: a QoS parameter for ranging, and a QoS parameter for sidelink positioning, the QoS parameter for ranging is used by a radio access network device in the network side device for resource scheduling when the UE performs ranging, and the QoS parameter for sidelink positioning is used by the radio access network device for resource scheduling when the UE performs sidelink positioning.

12. The method according to claim 11, wherein after the receiving, by the first network element, first information sent by the second network element, the method further comprises:
sending, by the first network element, second information to the radio access network device, wherein the second information comprises at least one of the following: the first information, ranging authorization information, and sidelink positioning authorization information, the ranging authorization information indicates to allow the UE to perform ranging, and the sidelink positioning authorization information indicates to allow the UE to perform sidelink positioning.

13. The method according to claim 11 or 12, wherein after the receiving, by the first network element, first information sent by the second network element, the method further comprises:
storing, by the first network element, the first information in context of the UE.

14. A parameter configuration method, comprising:
receiving, by a second network element in a network side device, target information sent by a user equipment LTE, wherein the target information is used by the UE to request for a target parameter for ranging and/or sidelink positioning, and the target information comprises at least one of the following: capability information of the UE about supporting ranging, capability information of the UE about supporting sidelink positioning, request information for a ranging policy, and request information for a sidelink positioning policy; and
determining, by the second network element based on the target information, the target parameter, and sending the target parameter to the UE, wherein
the target parameter comprises at least one of the following: an identifier of a public land mobile network PLMN authorized for ranging, an identifier of a PLMN authorized for positioning, a service authorized for ranging and an identifier of a target layer corresponding to the service authorized for ranging, a service authorized for positioning and an identifier of a target layer corresponding to the service authorized for positioning, a service security parameter, a discovery parameter, a quality of service QoS parameter, and an access stratum AS configuration parameter.

15. The method according to claim 14, wherein the target information meets at least one of the following that: the target information is carried in a UE policy container in a registration request message, the target information is carried in a UE policy request message, and the target information is carried in a mobility management capability container in the registration request message.

16. The method according to claim 15, wherein in a case that the target information is carried in the mobility management capability container in the registration request message, the receiving, by a second network element in a network side device, target information sent by a user equipment UE comprises:
receiving, by the second network element, the target information sent by a first network element in the network side device.

17. The method according to claim 16, wherein after the receiving, by a second network element in a network side device, target information sent by a user equipment LTE, the method further comprises:
determining, by the second network element based on the target information, first information, and sending the first information to the first network element, wherein the first information comprises at least one of the following: a QoS parameter for ranging, and a QoS parameter for sidelink positioning, the QoS parameter for ranging is used by a radio access network device in the network side device for resource scheduling when the UE performs ranging, and the QoS parameter for sidelink positioning is used by the radio access network device for resource scheduling when the UE performs sidelink positioning.

18. A parameter configuration method, comprising:
receiving, by a radio access network device in a network side device, second information sent by a first network element in the network side device, wherein the second information comprises at least one of the following: a quality of service QoS parameter for ranging, a quality of service QoS parameter for sidelink positioning, ranging authorization information, and sidelink positioning authorization information; and
determining, by the radio access network device based on the second information, first indication information, and sending the first indication information to a user equipment UE, wherein the first indication information indicates at least one of the following that: the UE is allowed to perform ranging, the UE is allowed to perform sidelink positioning, resource scheduling is performed when the UE performs ranging, and resource scheduling is performed when the UE performs sidelink positioning, wherein
the QoS parameter for ranging is used by the radio access network device for resource scheduling when the UE performs ranging, the QoS parameter for sidelink positioning is used by the radio access network device for resource scheduling when the UE performs sidelink positioning, the ranging authorization information indicates to allow the UE to perform ranging, and the sidelink positioning authorization information indicates to allow the UE to perform sidelink positioning.

19. A parameter configuration apparatus, comprising a sending module and a receiving module, wherein
the sending module is configured to send target information to a network side device, wherein the target information is used to request for a target parameter for ranging and/or sidelink positioning, and the target information comprises at least one of the following: capability information of a user equipment UE about supporting ranging, capability information of the UE about supporting sidelink positioning, request information for a ranging policy, and request information for a sidelink positioning policy; and
the receiving module is configured to receive the target parameter sent by the network side device.

20. The apparatus according to claim 19, wherein the network side device comprises at least one of the following: a first network element, and a second network element.

21. The apparatus according to claim 20, wherein in a case that the network side device comprises the first network element, the target information is carried in a mobility management capability container in a registration request message.

22. The apparatus according to claim 20, wherein in a case that the network side device comprises the second network element, the target information meets at least one of the following that: the target information is carried in a UE policy container in a registration request message, the target information is carried in a UE policy request message, and the target information is carried in a mobility management capability container in the registration request message.

23. The apparatus according to any one of claims 19 to 22, wherein the target parameter comprises at least one of the following: an identifier of a public land mobile network PLMN authorized for ranging, an identifier of a PLMN authorized for positioning, a service authorized for ranging and an identifier of a target layer corresponding to the service authorized for ranging, a service authorized for positioning and an identifier of a target layer corresponding to the service authorized for positioning, a service security parameter, a discovery parameter, a quality of service QoS parameter, and an access stratum AS configuration parameter.

24. The apparatus according to any one of claims 19 to 23, wherein the network side device comprises a radio access network device, and the receiving module is further configured to receive, after the target parameter sent by the network side device is received, first indication information sent by the radio access network device, wherein the first indication information indicates at least one of the following that: the UE is allowed to perform ranging, the UE is allowed to perform sidelink positioning, resource scheduling is performed when the UE performs ranging, and resource scheduling is performed when the UE performs sidelink positioning.

25. A parameter configuration apparatus, comprising a receiving module and a sending module, wherein
the receiving module is configured to receive target information sent by a user equipment LTE, wherein the target information is used by the UE to request for a target parameter for ranging and/or sidelink positioning, and the target information comprises at least one of the following: capability information of the UE about supporting ranging, capability information of the UE about supporting sidelink positioning, request information for a ranging policy, and request information for a sidelink positioning policy; and
the sending module is configured to send the target information to a second network element in a network side device, wherein
the target parameter comprises at least one of the following: an identifier of a public land mobile network PLMN authorized for ranging, an identifier of a PLMN authorized for positioning, a service authorized for ranging and an identifier of a target layer corresponding to the service authorized for ranging, a service authorized for positioning and an identifier of a target layer corresponding to the service authorized for positioning, a service security parameter, a discovery parameter, a quality of service QoS parameter, and an access stratum AS configuration parameter.

26. The apparatus according to claim 25, wherein the target information is carried in a mobility management capability container in a registration request message.

27. The apparatus according to claim 25 or 26, wherein the parameter configuration apparatus further comprises a performing module, and
the performing module is configured to perform, based on the target information, after the receiving module receives the target information sent by the UE and before the sending module sends the target information to the second network element in the network side device, at least one of the following: selecting a second network element that supports the UE in performing ranging and/or sidelink positioning, and querying a unified data management UDM network element for whether the UE is authorized to perform ranging and/or sidelink positioning.

28. The apparatus according to claim 27, wherein the performing module is specifically configured to select, based on the target information, the second network element that supports the UE in performing ranging and/or sidelink positioning; and
the sending module is specifically configured to send the target information to the selected second network element.

29. The apparatus according to claim 27, wherein the receiving module is further configured to receive, after the sending module sends the target information to the second network element in the network side device, first information sent by the second network element, wherein the first information comprises at least one of the following: a QoS parameter for ranging, and a QoS parameter for sidelink positioning, the QoS parameter for ranging is used by a radio access network device in the network side device for resource scheduling when the UE performs ranging, and the QoS parameter for sidelink positioning is used by the radio access network device for resource scheduling when the UE performs sidelink positioning.

30. The apparatus according to claim 29, wherein the sending module is further configured to send, after the receiving module receives the first information sent by the second network element, second information to the radio access network device, wherein the second information comprises at least one of the following: the first information, ranging authorization information, and sidelink positioning authorization information, the ranging authorization information indicates to allow the UE to perform ranging, and the sidelink positioning authorization information indicates to allow the UE to perform sidelink positioning.

31. The apparatus according to claim 29 or 30, wherein the parameter configuration apparatus further comprises a storage module, and
the storage module is configured to store, after the receiving module receives the first information sent by the second network element, the first information in context of the UE.

32. A parameter configuration apparatus, comprising a receiving module, a determining module, and a sending module, wherein
the receiving module is configured to receive target information sent by a user equipment LTE, wherein the target information is used by the UE to request for a target parameter for ranging and/or sidelink positioning, and the target information comprises at least one of the following: capability information of the UE about supporting ranging, capability information of the UE about supporting sidelink positioning, request information for a ranging policy, and request information for a sidelink positioning policy;
the determining module is configured to determine the target parameter based on the target information; and
the sending module is configured to send the target parameter to the UE, wherein
the target parameter comprises at least one of the following: an identifier of a public land mobile network PLMN authorized for ranging, an identifier of a PLMN authorized for positioning, a service authorized for ranging and an identifier of a target layer corresponding to the service authorized for ranging, a service authorized for positioning and an identifier of a target layer corresponding to the service authorized for positioning, a service security parameter, a discovery parameter, a quality of service QoS parameter, and an access stratum AS configuration parameter.

33. The apparatus according to claim 32, wherein the target information meets at least one of the following that: the target information is carried in a UE policy container in a registration request message, the target information is carried in a UE policy request message, and the target information is carried in a mobility management capability container in the registration request message.

34. The apparatus according to claim 33, wherein in a case that the target information is carried in the mobility management capability container in the registration request message, the receiving module is specifically configured to receive the target information sent by a first network element in a network side device.

35. The apparatus according to claim 34, wherein the determining module is further configured to determine, after the receiving module receives the target information sent by the LTE, first information based on the target information; and
the sending module is further configured to send the first information to the first network element, wherein the first information comprises at least one of the following: a QoS parameter for ranging, and a QoS parameter for sidelink positioning, the QoS parameter for ranging is used by a radio access network device in the network side device for resource scheduling when the UE performs ranging, and the QoS parameter for sidelink positioning is used by the radio access network device for resource scheduling when the UE performs sidelink positioning.

36. A parameter configuration apparatus, comprising a receiving module, a determining module, and a sending module, wherein
the receiving module is configured to receive second information sent by a first network element in a network side device, wherein the second information comprises at least one of the following: a quality of service QoS parameter for ranging, a QoS parameter for sidelink positioning, ranging authorization information, and sidelink positioning authorization information; and
the determining module is configured to determine first indication information based on the second information, wherein the first indication information indicates at least one of the following that: the UE is allowed to perform ranging, the UE is allowed to perform sidelink positioning, resource scheduling is performed when the UE performs ranging, and resource scheduling is performed when the UE performs sidelink positioning; and
the sending module is configured to send the first indication information to a user equipment UE, wherein
the QoS parameter for ranging is used by the radio access network device for resource scheduling when the UE performs ranging, the QoS parameter for sidelink positioning is used by the radio access network device for resource scheduling when the UE performs sidelink positioning, the ranging authorization information indicates to allow the UE to perform ranging, and the sidelink positioning authorization information indicates to allow the UE to perform sidelink positioning.

37. A user equipment LTE, comprising a processor and a memory, wherein a program or instructions are stored in the memory and executable on the processor, and when the program or the instructions are executed by the processor, steps of the parameter configuration method according to any one of claims 1 to 6 are implemented.

38. A network side device, comprising a processor, a memory, wherein a program or instructions are stored in the memory and executable on the processor, and when the program or the instructions are executed by the processor, steps of the parameter configuration method according to any one of claims 7 to 13 are implemented, steps of the parameter configuration method according to any one of claims 14 to 17 are implemented, or steps of the parameter configuration method according to claim 18 are implemented.

39. A readable storage medium, wherein the readable storage medium stores a program or instructions, and when the program or the instructions are executed by a processor, steps of the parameter configuration method according to any one of claims 1 to 6 are implemented, steps of the parameter configuration method according to any one of claims 7 to 13 are implemented, steps of the parameter configuration method according to any one of claims 14 to 17 are implemented, or steps of the parameter configuration method according to claim 18 are implemented.

40. A communication system, wherein the communication system comprises the parameter configuration apparatus according to any one of claims 19 to 24, the parameter configuration apparatus according to any one of claims 25 to 31, the parameter configuration apparatus according to any one of claims 32 to 35, and the parameter configuration apparatus according to claim 36; or
the communication system comprises the user equipment UE according to claim 37 and the network side device according to claim 38.

41. A parameter configuration apparatus, wherein the apparatus is configured to perform the parameter configuration method according to any one of claims 1 to 6, the parameter configuration method according to any one of claims 7 to 13, the parameter configuration method according to any one of claims 14 to 17, or the parameter configuration method according to claim 18.

42. A computer program/program product, wherein the computer program/program product is executed by at least one processor to implement the parameter configuration method according to any one of claims 1 to 6, the parameter configuration method according to any one of claims 7 to 13, the parameter configuration method according to any one of claims 14 to 17, or the parameter configuration method according to claim 18.

43. A chip, wherein the chip comprises a processor and a communication interface, the communication interface is coupled to the processor, the processor is configured to execute a program or instructions to implement the parameter configuration method according to any one of claims 1 to 6, the parameter configuration method according to any one of claims 7 to 13, the parameter configuration method according to any one of claims 14 to 17, or the parameter configuration method according to claim 18.
